## Europäisches Patentamt
## European Patent Office
## Office européen des brevets

(11) Publication number: **0 199 157**
**B1**

## EUROPEAN PATENT SPECIFICATION

(45) Date of publication of patent specification: **29.11.89**

(51) Int. Cl.⁴: **A 01 K 83/00**

(21) Application number: **86104571.4**

(22) Date of filing: **03.04.86**

(54) A fishing hook.

(30) Priority: **05.04.85 JP 73249/85**

(43) Date of publication of application:
**29.10.86 Bulletin 86/44**

(45) Publication of the grant of the patent:
**29.11.89 Bulletin 89/48**

(84) Designated Contracting States:
**AT BE CH DE FR GB IT LI LU NL**

(56) References cited:
**GB-A-2 095 521**

(73) Proprietor: **Fujii, Toshitaka**
**481, Gonose-cho**
**Nishiwaki-shi Hyogo (JP)**
(73) Proprietor: **Fujii, Haruyuki**
**481, Gonose-cho**
**Nishiwaki-shi Hyogo (JP)**

(72) Inventor: **Fujii, Toshitaka**
**481, Gonose-cho**
**Nishiwaki-shi Hyogo (JP)**
Inventor: **Fujii, Haruyuki**
**481, Gonose-cho**
**Nishiwaki-shi Hyogo (JP)**

(74) Representative: **Dipl.-Ing. H. Hauck Dipl.-Phys.**
**W. Schmitz Dipl.-Ing. E. Graalfs Dipl.-Ing. W.**
**Wehnert Dr.-Ing. W. Döring**
**Neuer Wall 41**
**D-2000 Hamburg 36 (DE)**

EP 0 199 157 B1

## Description

The present invention relates to a fishing hook according to the preamble of claim 1.

Hooks used in fishing usually have a pointed tip at their end portion, such a form being conventionally estimated as the best suited.

Fishing hooks in use frequently strike against rocks or pebbles located on the sea bottom or the river bed which will damage the pointed tip. Thereby, the sharpness of the pointed tip will be decreased and as a result difficulties may occur during the piercing of the hook into fish bodies.

In this connection the UK application 2 095 521 discloses an improved tubular fishing hook having a sharpened end formed by cutting off the free end of the hook at an angle forming thereby a curved cutting edge an effective portion thereof being limited to a relatively small length adjacent the apex.

Therefore it is the object of the invention to provide a fishing hook which has at its free end an enlarged cutting edge, thereby guaranteeing a longer period of optimal functioning.

This object is attained by the features of claim 1.

According to the invention, a chisel-like blade part is shaped at the free end of the hook comprising two lateral surfaces which both are inclined towards the longitudinal axis of the hook portion adjacent the blade. The two surfaces form an intersecting line representing the cutting edge of the blade having an orientation transverse to the above mentioned longitudinal axis.

In one modification of the invention, the cutting edge has a straight form, another modification provides a cutting edge having a curved form.

It is understood that the angle comprised by the cutting edge and the plane defined by the hook may be chosen freely in realizing of the blade.

The invention will be further explained in detail by the help of drawings illustrating different embodiments.

Fig. 1 shows a perspective view of a fishing hook according to one embodiment of this invention.

Fig. 2A is a side view and Fig. 2B is a front view of the fishing hook shown in Fig. 1.

Fig. 3 is a perspective view showing another embodiment of the fishing hook according to the invention.

Fig. 4A is a side view and Fig. 4B is a front view of the fishing hook shown in Fig. 3.

Fig. 5 is a perspective view of a fishing hook showing still another embodiment of the invention.

Fig. 6A is a side view and Fig. 6B is a front view of the fishing hook shown in Fig. 5.

Fig. 7A is a side view and Fig. 7B is a front view of a fishing hook of still another embodiment of this invention.

Fig. 8A is a side view and Fig. 8B is a front view of a fishing hook showing still another embodiment of this invention.

Figs. 9 and 10 show an application of the invention to other types of fishing hook.

A fishing hook 1 according to the invention consists of a fishing line-tying portion 3, a stem part 4, a bosom part 5 and an end part 6 whereon a blade is formed to constitute a cutting edge 2 as the tip portion of the fishing hook.

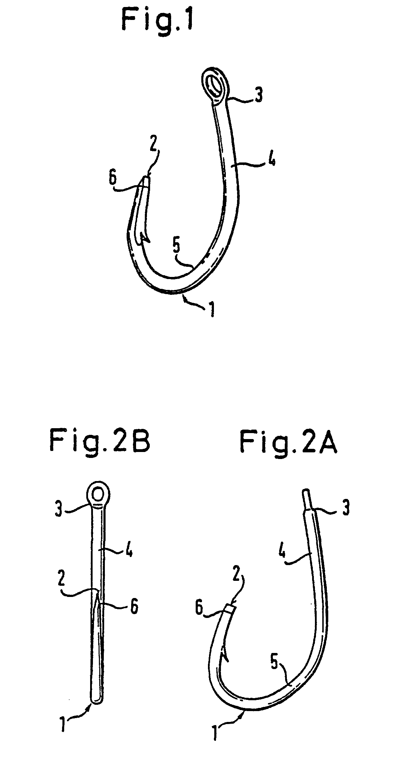

Figs. 1 and 2 show the case when the top line of the blade 2 forms approximately 90° against the stem of the hook, as the fishing hook is seen from the side angle. In regards to the forms of the blade line 2, following various types can be conceived:

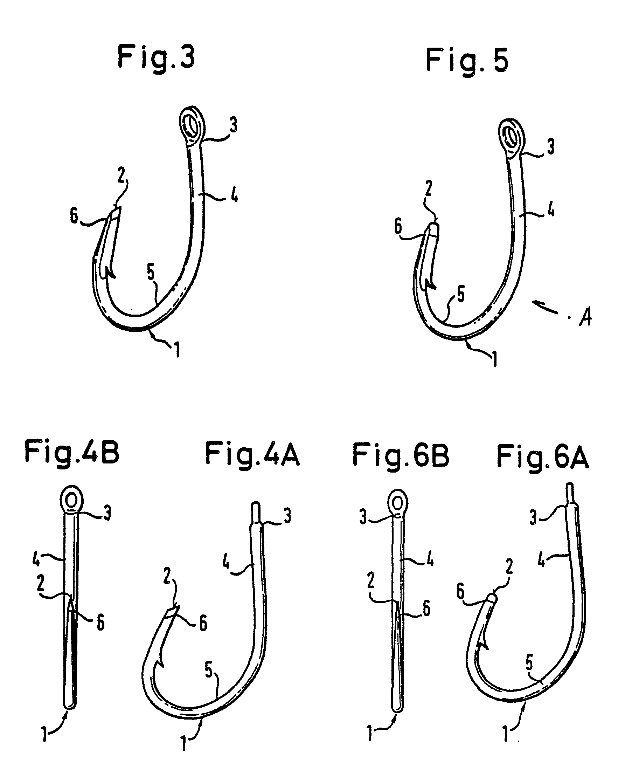

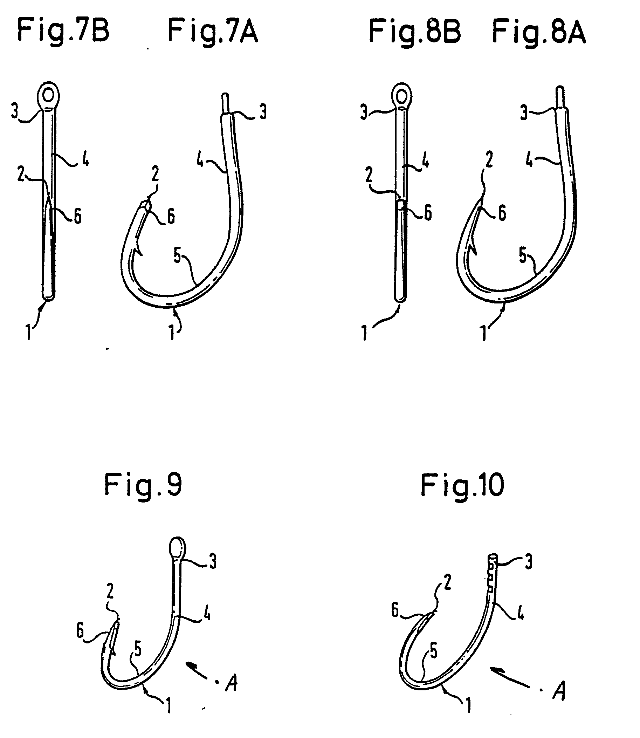

Figs. 3 and 4 show the case when the inside tip of the blade line is higher than outside or, in other words, when the apex line of the blade 2 is formed larger than 90° against the stem of the hook. Figs. 5 and 6 show the case when the apex line of the blade 2 has a circular curve or, in other words, when the tip portion of the hook takes the form of a fan, as it is seen from the side angle. Fig. 7 shows a form of the tip of hook having bent in a curved shape or, in other words, the apex line of the blade has round top. Besides these, it is possible to form the blade part of the hook so that the apex line of the blade 2 has, for instance, a concave profile.

Above are the descriptions of the fishing hook when it is seen from the side angle. It is possible, however, as shown in Fig. 8 to form the hook having a blade portion oriented in a different angle. That is to say, regardless of the angle of observation or the form of the apex line of the blade part 2, the purpose of the invention can be attained as far as the tip of the fishing hook is imparted a blade part 2 instead of a pointed tip. By the way, Fig. 9 represents the case when the concept of the invention is adapted to a fishing hook for angling small fishes. Furthermore, Fig. 10 is the case in which the concept is adapted to a fishing hook for angling "ayu" (Japanese sweet fish).

A fishing hook in accordance with this invention has an advantage in heightening the performance of a fishing hook in penetrating into the bodies of fishes, enabling the stem of hook to cut body of fishes sharply and instantly when contacting a fish with a blade provided.

Another advantage of a fishing hook in accordance with this invention, the sharpness of the tip of a fishing hook can be maintained over a longer period of use as the result of the fact that the tip of the hook is a blade instead of a point, when compared with the conventional fishing hook. That is to say, the tip of a fishing hook tends to inflict damage, when used, by frequently making impact against hard substances such as rocks or pebbles on the river bed or the sea bottom. Being provided with a blade instead of a pointed head, however, a fishing hook in accordance with this invention has a superior resistance against breakage and abrasion, keeping the sharpness of the tip of the hook over a longer period.

## Claims

1. Fishing hook having a cutting edge formed by at least one lateral surface cut along a plane inclined towards the longitudinal axis of the hook portion adjacent the blade, characterized in that the blade part is defined by two lateral surfaces, both inclined towards the longitudinal axis of the hook portion adjacent the blade part and forming an intersecting line having an orientation transverse to the longitudinal axis, said intersecting line defining the cutting edge.

2. Fishing hook according to claim 1, characterized in that the cutting edge has a straight form.

3. Fishing hook according to claim 1, characterized in that the cutting edge has a curved form.

**Patentansprüche**

1. Angelhaken mit einer Schneidekante, die durch mindestens eine schräg zur Längsachse des an die Klinge angrenzenden Hakenbereiches geneigte Seitenfläche gebildet wird, dadurch gekennzeichnet, daß der Klingenbereich durch zwei Seitenflächen definiert wird, die beide schräg zur Längsachse des an den Klingenbereich angrenzenden Hakenbereiches geneigt sind und die eine Schnittlinie bilden, die quer zur Längsachse ausgerichtet ist und die die Schneidekante definiert.

2. Angelhaken nach Anspruch 1, dadurch gekennzeichnet, daß die Schneidekante gerade ist.

3. Angelhaken nach Anspruch 1, dadurch gekennzeichnet, daß die Schneidekante gekrümmt ist.

**Revendications**

1. Hameçon avec un bord coupant étant formé d'au moins d'une face latérale inclinée relative à l'axe longitudinale de la partie du hameçon adjacent à la lame, caractérisé en ce que la lame est définie par deux faces laterales étant toutes les deux inclinées relative à l'axe longitudinale de la partie du hameçon adjacent à la lame et formant une ligne de section étant orientée transversale à l'axe longitudinale ladite ligne de section définant le bord coupant.

2. Hameçon selon la revendication 1 caractérisé en ce que le bord coupant a une forme droite.

3. Hameçon selon la revendication 1 caractérisé en ce que le bord coupant a une forme courbée.

# Fig.1

# Fig.2B    Fig.2A

Fig.3

Fig.5

Fig.4B Fig.4A Fig.6B Fig.6A

# Fig.7B  Fig.7A

# Fig.8B  Fig.8A

# Fig.9

# Fig.10